# EUROPÄISCHE PATENTSCHRIFT

(11) **EP 2 055 922 B1**
(45) Veröffentlichungstag und Bekanntmachung des Hinweises auf die Patenterteilung: **01.03.2017**
(21) Anmeldenummer: 08018302.3
(22) Anmeldetag: 20.10.2008
(51) Int. Cl.: F02M 26/46

(54) **Verfahren zum Betreiben einer Brennkraftmaschine**
Method for operating a combustion engine
Procédé destiné au fonctionnement d'un moteur à combustion interne

(30) Priorität: 02.11.2007 DE 102007052475
(43) Veröffentlichungstag der Anmeldung: 06.05.2009
(73) Patentinhaber: Volkswagen Aktiengesellschaft, 38440 Wolfsburg (DE)
(72) Erfinder: Scher, Uwe, 38162 Cremlingen/Destedt (DE)

(56) Entgegenhaltungen:
- DE-A1- 19 900 729
- DE-A1-102006 038 863
- FR-A1- 2 868 127
- FR-A1- 2 892 150

## Beschreibung

Die Erfindung betrifft ein Verfahren zum Betreiben einer Brennkraftmaschine, wobei wenigstens einem Brennraum der Brennkraftmaschine jeweils Frischluft, Kraftstoff und rückgeführtes Abgas zugeführt und in Abhängigkeit von einer Lastanforderung an die Brennkraftmaschine, eines Betriebszustandes der Brennkraftmaschine und eines momentan aktiven Brennverfahrens eine einem Brennraum zuzuführende Kraftstoffmenge und Menge des rückgeführten Abgases bestimmt wird, gemäß dem Oberbegriff des Patentanspruchs 1.

Die Regelung eines Dieselmotors erfolgt im Wesentlichen über die Zusammensetzung des Gemisches aus Kraftstoff und Frischladung (Qualitätsregelung). Die abgegebene Leistung wird dabei in Abhängigkeit vom Lastpunkt über die eingespritzte Kraftstoffmenge bestimmt. Weiterhin ist es bekannt eine Abgasrückführung vorzusehen. Die Frischladung setzt sich hierbei aus einer Mischung von Luft und zurückgeführtem Abgas zusammen. Auf diesen Grundzusammenhängen basieren Regelungskonzepte für verschiedene Motorteilfunktionen. Zum Beispiel die AGR-Raten-Regelung: Der Dieselmotor saugt ein konstantes Volumen an, welches in Teillastbetriebspunkten üblicherweise aus Frischluft und zurückgeführtem Abgas besteht. Wird eine dieser Komponenten (z.B. die angesaugte Frischluftmasse) gemessen, lässt sich die andere Komponente (hier das zurückgeführte Abgas) errechnen und damit regeln. Dieses Prinzip funktioniert jedoch nur so lange, wie das Ansaugvolumen des Motors konstant bleibt. Beim Einsatz einer variablen Ventilsteuerung (VVT) ändert sich dies jedoch gravierend. Das Schluckverhalten des Motors wird dabei durch Veränderung der Öffnungs- und/oder Schließzeitpunkte bzw. der Ventilhübe für Einlass- und Auslassventil(e) verändert. Eine herkömmliche Regelung für Dieselmotoren kann daher nicht zusammen mit einer variablen Ventilsteuerung verwendet werden.

Aus der DE 198 31 748 A1 ist ein Verfahren zum Steuern einer Brennkraftmaschine bekannt, wobei ausgehend von einem Signal, das den Feuchtigkeitsgehalt der Luft charakterisiert, wenigstes eine erste Messgröße, die die angesaugte Luftmasse charakterisiert, und/oder eine zweite Messgröße, die den Sauerstoffgehalt der Luft charakterisiert, und/oder eine Sollgröße für eine die zugeführte Luft beeinflussende Steuerung, korrigierbar ist.

In der DE 199 00 729 A1 wird eine Brennkraftmaschine offenbart, die mit einer in einem Ansaugrohr angeordneten Drosselklappe versehen ist, über die Luft in einem Brennraum zuführbar ist. Des Weiteren ist die Brennkraftmaschine mit einem in einer Abgasrückführleitung angeordneten Ventil versehen, über das Abgas dem Ansaugrohr zuführbar ist. Von einem Steuergerät kann der Massenstrom über die Drosselklappe und der Massenstrom über das Ventil ermittelt werden. Die ermittelte Massenstrom über das Ventil kann in Abhängigkeit von dem Luft/Kraftstoff-Verhältnis (Lambda) in einen Inertgasanteil und einen Luftanteil aufgeteilt werden.

Aus der FR 2 868 127 A1 ist ein Verfahren zur Messung eines Kühlgasanteils bekannt, das dem Verbrennungsmotor zugeführt wird, wobei der Inertgasanteil bestimmt wird.

Aus der FR 2 892 150 A1 ist ein Verfahren zur Bestimmung der Abgasrückführung zum Verbrennungsmotor bekannt, wobei zur Bestimmung der Abgasrückführung die Enthalpie des fließenden Gases durch den Verbrennungsmotor berücksichtigt wird.

Aus der DE 10 2006 038 863 A1 ist ein System und ein Verfahren zur Regelung und Schätzung von Hochdruck- und Niedrigdruck-Abgasrückführungen bekannt, wobei anhand von Luftmassenmesseinrichtungen die Verhältnisse von Abgasrückführströmen geregelt werden.

Der Erfindung liegt die Aufgabe zugrunde, ein Verfahren der o.g. Art hinsichtlich der Beeinflussung des Brennverlaufes in Arbeitszylindern der Brennkraftmaschine zu verbessern.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verfahren der o.g. Art erfindungsgemäß vorgesehen, dass in einem ersten Schritt ein für die Verbrennung erforderlicher Anteil von Sauerstoff und ein für die Verbrennung erforderlicher Anteil wenigstens eines Inertgases in der zugeführten Frischluft bestimmt werden und in einem zweiten Schritt in Abhängigkeit von dem erforderlichen Anteil des Sauerstoffes und dem erforderlichen Anteil wenigstens eines Inertgases in der zugeführten Frischluft die einem Brennraum zuzuführende Kraftstoffmenge, Frischluftmenge und/oder die Menge des rückgeführten Abgases bestimmt wird bzw. werden.

Dies hat den Vorteil, dass verschiedene Komponenten der angesaugten Frischluft nach ihrem Beitrag zum Verbrennungsablauf getrennt voneinander berücksichtigt werden.

Das wenigstens eine Inertgas umfasst beispielsweise Stickstoff (N₂), Kohlendioxid (CO₂), Wasserdampf (H₂O), Stickoxid (NOₓ), Kohlenmonoxid (CO), Kohlenwasserstoff (HC) und/oder Partikel.

Erfindungsgemäß wird das zurückgeführte Abgas mittels einer Niederdruckabgasrückführung (ND-AGR) und mittels einer Hochdruckabgasrückführung (HD-AGR), und/oder einer inneren Abgasrückführung (innere AGR) zugeführt sowie zugemessen.

In einer bevorzugten Weiterbildung der Erfindung wird bzw. werden in dem zweiten Schritt die einem Brennraum zuzuführende Kraftstoffmenge, Frischluftmenge und/oder Menge des rückgeführten Abgases derart bestimmt, dass die Gesamtladung dieses Brennraumes eine vorbestimmte Menge Stickstoff (N₂), Kohlendioxid (CO₂), Sauerstoff (O₂), Inertgas und/oder Wasserdampf (H₂O), insbesondere mit einer vorbestimmten Ladungsdichte, enthält.

Zweckmäßigerweise wird der Anteil des Sauerstoffes in der zugeführten Frischluft aus einem ersten Lambdasondensignal, welches einen Lambdawert eines Abgases repräsentiert, einem zweiten Lambdasondensignal, welches einen Lambdawert der Frischluft repräsentiert, und einem Massenstromsignal, welches einen Massenstrom der Frischluft repräsentiert, berechnet.

In einer bevorzugten Ausführungsform werden im ersten Schritt zusätzlich ein Anteil des Sauerstoffes und ein Anteil wenigstens eines Inertgases des rückgeführten Abgases bestimmt und im zweiten Schritt wird bzw. werden die einem Brennraum zuzuführende Kraftstoffmenge, Frischluftmenge und/oder Menge des rückgeführten Abgases zusätzlich in Abhängigkeit von dem Anteil des Sauerstoffes und dem Anteil wenigstens eines Inertgases des rückgeführten Abgases bestimmt.

Zweckmäßigerweise wird die bestimmte Frischluftmenge durch eine variable Ventilsteuerung einem Brennraum zugemessen.

Die bestimmte Frischluftmenge wird den Brennräumen der Brennkraftmaschine zweckmäßigerweise zylinderindividuell zugemessen.

Die Erfindung wird im Folgenden anhand der Zeichnung näher erläutert. Diese zeigt in
- Fig. 1: eine Massenstrombilanz der dem Verbrennungsprozess zugeführten und von diesem abgeleiteten Massenströme in schematischer Darstellung und
- Fig. 2: ein schematisches Blockdiagramm einer bevorzugten Ausführungsform des erfindungsgemäßen Verfahrens.

Erfindungsgemäß werden die Komponenten der angesaugten Frischladung für eine Brennkraftmaschine nach ihrem Beitrag zum Verbrennungsablauf differenziert:
1. Sauerstoff (O₂) bestimmt zusammen mit der eingespritzten Kraftstoffmenge das Luftverhältnis (Lambda λ), welches maßgeblich das Rauch- und NOₓ-Verhalten der Brennkraftmaschine beeinflusst. Der Sauerstoffbedarf wird dabei vom Lastpunkt, d.h. der einzuspritzenden Kraftstoffmenge, bestimmt.und ist nicht frei wählbar.
2. Inertgas. Hierunter sind alle Gaskomponenten zusammengefasst, die nicht direkt an der Verbrennung teilnehmen, sondern allein durch ihre Anwesenheit den Verbrennungsablauf beeinflussen. Dies sind im Wesentlichen:
   - Stickstoff (N₂)
   - Kohlendioxid (CO₂)
   - Wasser(dampf)(H₂O)

Andere Komponenten haben keinen wesentlichen Einfluss auf den Verbrennungsablauf, da sie nur in sehr kleinen Mengen auftreten. Diese können zwar als inerte Gaskomponenten berücksichtigt jedoch ggf. vernachlässigt werden. Hierunter fallen insbesondere:
- Stickoxide (NOₓ,NO, NO₂)
- Kohlenmonoxid (CO)
- Kohlenwasserstoffe (HC)
- Partikel
- NiLi (sonstige nicht limitierte Komponenten)

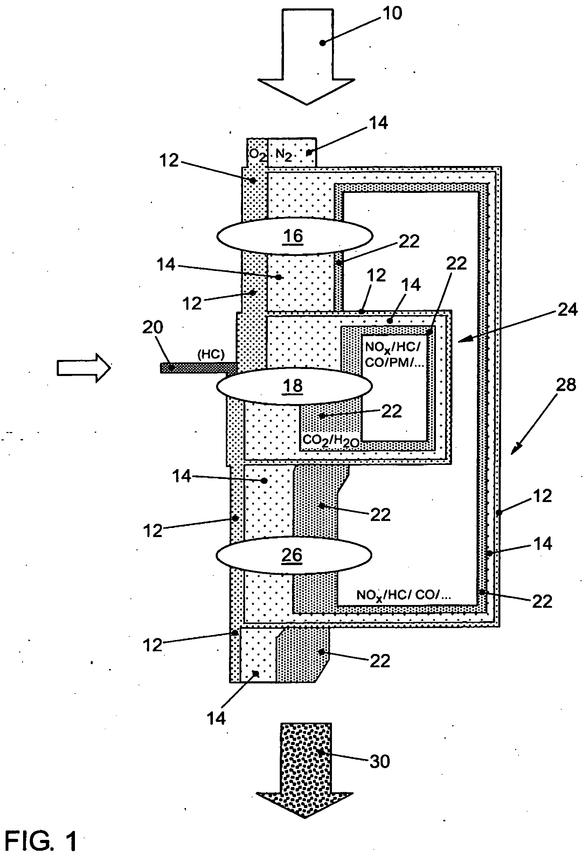

Durch eine geeignete Kombination aus Massenstrommessung und Konzentrationssensorik (z.B. über λ-Sonden) können alle Teilströme des Systems getrennt nach O₂ und Inertgasanteilen ermittelt werden. Diese Massenströme sind in Fig. 1 dargestellt.

Bei der in Fig. 1 dargestellten Massenstrombilanz wird Frischluft 10 für eine Verbrennung zugeführt. Diese Frischluft 10 enthält im Wesentlichen Sauerstoff O₂ 12 und Stickstoff N₂ 14 und wird zunächst in einem Verdichter 16 eines ansonsten nicht dargestellten Abgasturboladers einer Dichtererhöhung unterzogen. Diese derart verdichtete Frischluft wird einem Brennraum 18 zur Verbrennung zugeführt. Diesem Brennraum 18 wird weiterhin Kraftstoff 20 (Kohlenwasserstoffe HC) zugeführt. Nach der Verbrennung liegen eine reduzierte Menge Sauerstoff O₂ 12, eine nahezu unveränderte Menge Stickstoff N₂ 14 und zusätzliche Verbrennungsprodukte 22, wie beispielsweise Kohlendioxid CO₂, Wasser H₂O, Stickoxide NOₓ, Kohlenwasserstoffe HC, Kohlenmonoxid CO und Partikel PM vor.

Ein Teil der Massenströme Sauerstoff O₂ 12, Stickstoff N₂ 14 und zusätzliche Verbrennungsprodukte 22 werden über eine Hochdruck-Abgasrückführung (HD-AGR) 24 wieder dem der Verbrennung im Brennraum zugeführten Massenstrom stromab des Verdichters 16 rückgeführt. Der restliche Massenstrom wird über eine Turbine 26 des Abgasturboladers geführt und treibt den Verdichter 16 an. Stromab der Turbine 26 wird wiederum ein Teil des Massenstromes über eine Niederdruck-Abgasrückführung (ND-AGR) 28 erneut dem der Verbrennung im Brennraum 18 zugeführten Massenstrom stromauf des Verdichters 16 rückgeführt. Der verbleibende Rest des Massenstromes wird als Abgas 30 an die Umgebung abgegeben.

Die Erfindung ermöglicht durch die unabhängige Bilanzierung von O₂ 12 und Inertgas 14 die Regelung der Frischladungszusammensetzung eines beliebigen Betriebspunktes nach folgenden Kriterien bzw. Anteilen:
1. O₂-Masse (maßgeblich bestimmend für das Verbrennungsluftverhältnis).
2. Inertgas-Masse (maßgeblich bestimmend für die Verbrennungsgeschwindigkeit)
3. Ladungsdichte (Aufladegrad)

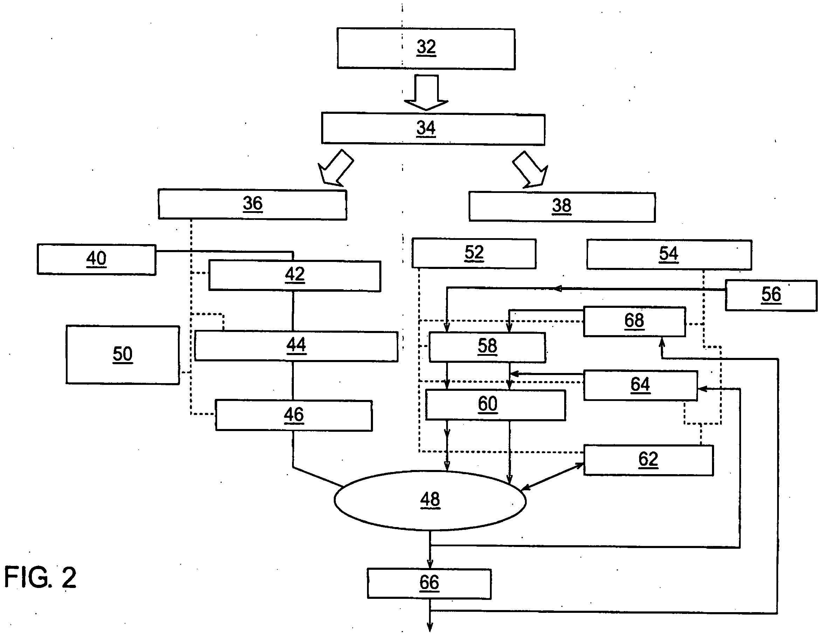

Fig. 2 veranschaulicht schematisch das erfindungsgemäße Verfahren. Ein Fahrerwunsch 32 wird an einen Betriebsartenmanager 34 übergeben. Dieser gibt entsprechende Daten an einen Einspritzmanager 36 und einen Ladungsmanager 38 weiter.

Auf der Seite des Einspritzmanagers 36 wird Kraftstoff 40 gemäß einer Einspritzstrategie 42, einer Mengenzumessung 44 und einer Einspritzsteuerung 46 einer Verbrennung 48 zugeführt. Ein Brennbeginn-Rechner 50 beeinflusst dabei die Einspritzstrategie 42, die Mengenzumessung 44 und die Einspritzsteuerung 46.

Auf der Seite des Ladungsmanagers 38 wird ein O₂-Bedarf 52 und ein Inertgasbedarf 54 bestimmt. Frischluft 56 wird gemäß einer Aufladung 58 (Verdichter) und eines Einlasstimings 60 der Verbrennung 48 zugeführt. Über eine innere Abgasrückführung 62 wird ein Teil des Abgases im Brennraum zurückgehalten. Über eine HD-AGR 64 wird ein Teil des Abgases stromauf einer Turbine 66 eines Abgasturboladers abgenommen und stromab der Aufladung 58 dem Frischluftmassenstrom wieder zugeführt. Über eine ND-AGR 68 wird ein Teil des Abgases stromab der Turbine 66 abgenommen und stromauf der Aufladung 58 dem Frischluftmassenstrom wieder zugeführt. Die Steuerorgane für Aufladung 58, Einlasstiming 60, innere Abgasrückführung 62, HD-AGR 64 und ND-AGR 68 werden von dem O₂-Bedarf 52 und dem Inertgasbedarf 54 beeinflusst und entsprechend einem Gehalt an O₂ und Inertgas der Frischluft eingestellt.

Der Betriebsartenmanager 34 koordiniert das Zusammenspiel des Einspritzmanagers 36, der für die Regelung aller Einspritzparameter verantwortlich ist, mit dem Ladungsmanager 38. Der Ladungsmanager 38 führt die o.g. frischgasseitige Bilanzierung durch, gleicht das Ergebnis mit dem Motorbedarf ab und löst die notwendigen Regelungseingriffe aus.

Der Fahrerwunsch, der u.a. eine Beschleunigung oder auch eine konstante Geschwindigkeit sein kann, ist Vorgabe an die Brennkraftmaschine. Durch diese Vorgabe ergibt sich die Kraftstoffmenge, die für die Realisierung benötigt wird. Der Betriebsartenmanager 34 managt das Zusammenspiel der Kraftstoffmenge und des Luftpfades. Er entscheidet die Betriebsart: Konventioneller Betrieb (meistens), Regenerationsbetrieb (Partikelfilter, NOₓ-Speicherkatalysator) oder Homogenbetrieb. Aus den Signalen, die das System erhält (Grunddaten des Betriebszustandes) in Zusammenspiel mit dem Fahrerwunsch, entscheidet der Betriebsartenmanager 34, welche Betriebsart bevorzugt ist und gibt entsprechende Signale an das Einspitzmanagement 36 und Ladungsmanagement 38.

Das Ladungsmanagement 38 regelt alle wesentlichen Parameter der Frischladung. Dies sind insbesondere die Ladungsmenge (Masse), die Ladungsdichte, die Zusammensetzung (Verhältnis von O₂; CO₂; H₂O; N₂ und/oder sonstige Bestandteile, aufgeschlüsselt nach funktionsrelevanten Eigenschaften (O₂-Anteil, Wärmekapazität), Eigenschaften (Druck, Temperatur, usw.), unter Einsatz entsprechender Sensoren zur Erfassung diverser Massenströme, Konzentrationen sowie maßgeblicher Eigenschaften (Drücke, Temperaturen,..) der Ladung.

Das Einspritzmanagement 36 regelt alle Parameter der Kraftstoffeinbringung in den Brennraum, insbesondere Druckerzeugung / Druckvariationen, Zumessung (incl. Portionierung und Aufteilung in Teilmengen) und/oder zeitlich variable Einbringung (Ratenverlaufsregelung), Düsenparameter (Anzahl, Schaltung, Geometrie).

Es sind für folgende Parameter unabhängige Stellorgane vorgesehen:
- Dichte (über die Aufladung)
- Zusammensetzung (über EGR- Rate)
- Durchsatz (über WT)

Weiterhin ist vorgesehen:
- Sensorik zur Erfassung der Zusammensetzung der Frischladung (z.B. Ansaug-Lambda)
- übliche Druck und Temperatursensorik

Das Ladungsmanagement 38 enthält folgende Komponenten:
1. unabhängige Massenbilanzierung für alle die Verbrennung beeinflussenden Gaskomponenten incl. vollständiger Eigenschaftserfassung (per Messung oder integrierter Berechnung; wie Sauerstoff- und Inertgasgehalt). Ziele sind dabei:
   a) Erfassung aller Systemgrößen in allen wesentlichen Teilbereichen (Teilströmen) des Gesamtsystems (Hauptstrom, bis zu drei EGR-Ströme)
   b) Integration von Vorhersagemodellen zur Optimierung der Regelung insbesondere im Dynamikbetrieb (Zündverzögerungsmodell; Brennverlaufs- / Heizverlaufsrechner)
   c) Modularer Aufbau zur einfachen unabhängigen Funktionserweiterung (in Hinblick auf das dritte EGR-System)
   d) Unabhängige Bilanzierung der Hauptbestandteile O₂; N₂; CO₂; H₂O (oder zumindest nach O₂ und inerten Komponenten getrennt)
2. Zentrale Verwaltung aller System beschreibenden Größen in einem "System-Bus" mit Zugriff aller (insbes. vorausrechnender) Module des Regelkreises zur zentralen Erfassung aller notwendigen Daten (z.B. Zylinderdruckverlauf, Ansaugluftverhältnis, Stellung der Ladungswechselsteuerorgane (Nockenwellensteller), Abgasmassenstrom (EGR-Teilstrom)
3. Integration von Vorhersage- und Auswertemodulen zur Parallelisierung von Berechnungsauswertung und real ablaufenden Prozessen mit der Möglichkeit zur Vorhersage des zukünftigen Systemverhaltens. Hauptaufgabe ist jedoch die Realtime-Ermittlung der Istwerte zur Regelung (Zylinderdruckgradient).

Das Einspritzmanagement 36 enthält folgende Komponenten:
- Mengenzumessung (Masse, Zeitpunkt)
- Optimierte Einspritzmuster (Mehrfach-, Vor-, Nacheinspritzung)
- pmi-Regelung
- Brennbeginnregelung
- und evtl. weitere

In einer bevorzugten Erweiterung der Erfindung ist eine Zündverzugsvorhersage vorgesehen, die insbesondere zur Regelung eine homogenen oder teilhomogenen Betriebsart (bzw. das Eintreten oder Verlassen dieser Betriebsart) dient. Hierbei ist das enge Zusammenspiel von Ladungsmanagement 38 und Einspritzmanagement 36 über den Status-Bus von entscheidender Bedeutung.

## Patentansprüche

1. Verfahren zum Betreiben einer Brennkraftmaschine, wobei wenigstens einem Brennraum der Brennkraftmaschine jeweils Frischluft, Kraftstoff und rückgeführtes Abgas mittels einer Niederdruckabgasrückführung (ND_AGR) zugeführt sowie zugemessen und in Abhängigkeit von einer Lastanforderung an die Brennkraftmaschine, eines Betriebszustandes der Brennkraftmaschine und eines momentan aktiven Brennverfahrens eine einem Brennraum zuzuführende Kraftstoffmenge und Menge des rückgeführten Abgases bestimmt wird, wobei in einem ersten Schritt in Abhängigkeit von einer Lastanforderung an die Brennkraftmaschine sowie eines Betriebszustandes der Brennkraftmaschine und eines momentan aktiven Brennverfahrens ein für die Verbrennung erforderlicher Anteil von Sauerstoff und ein für die Verbrennung erforderlicher Anteil wenigstens eines Inertgases in der zugeführten Frischluft bestimmt werden und **dadurch gekennzeichnet, dass** in einem zweiten Schritt in Abhängigkeit von dem erforderlichen Anteil des Sauerstoffes und dem erforderlichen Anteil wenigstens eines Inertgases in der zugeführten Frischluft die einem Brennraum zuzuführende Kraftstoffmenge, Frischluftmenge und/oder die Menge des rückgeführten Abgases bestimmt wird bzw. werden durch eine voneinander unabhängige Bilanzierung von Sauerstoff und Inertgas, wobei der Brennkraftmaschine ein Abgasturbolader zugeordnet ist und weiteres zurückgeführte Abgas mittels einer Hochdruckabgasrückführung (HD-AGR) und/oder einer inneren Abgasrückführung (innere AGR) zugeführt sowie zugemessen wird.

2. Verfahren nach Anspruch 1, **dadurch gekennzeichnet, dass** das wenigstens eine Inertgas Stickstoff (N₂), Kohlendioxid (CO₂), Wasserdampf (H₂O), Stickoxid (NOₓ), Kohlenmonoxid (CO), Kohlenwasserstoff (HC) und/oder Partikel umfasst.

3. Verfahren nach wenigstens einem der vorhergehenden Ansprüche, **dadurch gekennzeichnet, dass** in dem zweiten Schritt die einem Brennraum zuzuführende Kraftstoffmenge, Frischluftmenge und/oder Menge des rückgeführten Abgases derart bestimmt wird bzw. werden, dass die Gesamtladung dieses Brennraumes eine vorbestimmte Menge Stickstoff (N₂), Kohlendioxid (CO₂), Sauerstoff (O₂), Inertgas und/oder Wasserdampf (H₂O), insbesondere mit einer vorbestimmten Ladungsdichte, enthält.

4. Verfahren nach wenigstens einem der vorhergehenden Ansprüche, **dadurch gekennzeichnet, dass** der Anteil des Sauerstoffes in der zugeführten Frischluft aus einem ersten Lambdasondensignal, welches einen Lambdawert eines Abgases repräsentiert, einem zweiten Lambdasondensignal, welches einen Lambdawert der Frischluft repräsentiert, und einem Massenstromsignal, welches einen Massenstrom der Frischluft repräsentiert, berechnet wird.

5. Verfahren nach wenigstens einem der vorhergehenden Ansprüche, **dadurch gekennzeichnet, dass** im ersten Schritt zusätzlich ein Anteil des Sauerstoffes und ein Anteil wenigstens eines Inertgases des rückgeführten Abgases bestimmt werden und im zweiten Schritt die einem Brennraum zuzuführende Kraftstoffmenge, Frischluftmenge und/oder Menge des rückgeführten Abgases zusätzlich in Abhängigkeit von dem Anteil des Sauerstoffes und dem Anteil wenigstens eines Inertgases des rückgeführten Abgases bestimmt wird bzw. werden.

6. Verfahren nach wenigstens einem der vorhergehenden Ansprüche, **dadurch gekennzeichnet, dass** die bestimmte Frischluftmenge durch eine variable Ventilsteuerung einem Brennraum zugemessen wird.

7. Verfahren nach wenigstens einem der vorhergehenden Ansprüche, **dadurch gekennzeichnet, dass** die bestimmte Frischluftmenge den Brennräumen der Brennkraftmaschine zylinderindividuell zugemessen wird.

## Claims

1. Method for operating an internal combustion engine, wherein fresh air, fuel and recirculated exhaust gas via a low-pressure exhaust-gas recirculation (ND_AGR) arrangement are supplied and metered in each case into at least one combustion chamber of the internal combustion engine, and a fuel quantity to be supplied to a combustion chamber and quantity of recirculated exhaust gas are determined in a manner dependent on a load demand on the internal combustion engine, an operating state of the internal combustion engine and a presently active combustion method, wherein, in a first step, a fraction, required for the combustion, of oxygen and a fraction, required for the combustion, of at least one inert gas in the supplied fresh air are determined in a manner dependent on a load demand on the internal combustion engine and an operating state of the internal combustion engine and a presently active combustion method, **characterized in that,** in a second step, the fuel quantity to be supplied to a combustion chamber, fresh-air quantity and/or the quantity of the recirculated exhaust gas is or are determined, in a manner dependent on the required oxygen fraction and the required fraction of at least one inert gas in the supplied fresh air, by way of mutually independent balancing of oxygen and inert gas, wherein the internal combustion engine is assigned an exhaust-gas turbocharger, and further recirculated exhaust gas is supplied and metered in by way of a highpressure exhaust gas recirculation (HP EGR) arrangement and/or an internal exhaust-gas recirculation (innere AGR) arrangement.

2. Method according to Claim 1, **characterized in that** the at least one inert gas comprises nitrogen (N₂), carbon dioxide (CO₂), water vapour (H₂O), nitrogen oxide (NOₓ), carbon monoxide (CO), hydrocarbon (HC) and/or particles.

3. Method according to at least one of the preceding claims, **characterized in that**, in the second step, the fuel quantity to be supplied to a combustion chamber, fresh-air quantity and/or quantity of the recirculated exhaust gas is or are determined such that the total charge of said combustion chamber comprises a predetermined quantity of nitrogen (N₂), carbon dioxide (CO₂), oxygen (O₂), inert gas and/or water vapour (H₂O), in particular with a predetermined charge density.

4. Method according to at least one of the preceding claims, **characterized in that** the fraction of oxygen in the supplied fresh air is calculated from a first lambda probe signal, which represents a lambda value of an exhaust gas, a second lambda probe signal, which represents a lambda value of the fresh air, and a mass flow signal, which represents a mass flow of the fresh air.

5. Method according to at least one of the preceding claims, **characterized in that**, in the first step, a fraction of oxygen and a fraction of at least one inert gas of the recirculated exhaust gas are determined, and in the second step, the fuel quantity to be supplied to a combustion chamber, fresh-air quantity and/or quantity of the recirculated exhaust gas is or are additionally determined in a manner dependent on the fraction of oxygen and the fraction of at least one inert gas of the recirculated exhaust gas.

6. Method according to at least one of the preceding claims, **characterized in that** the determined fresh-air quantity is metered into a combustion chamber by way of a variable valve control means.

7. Method according to at least one of the preceding claims, **characterized in that** the determined fresh-air quantity is metered into the combustion chambers of the internal combustion engine on a cylinder-specific basis.

## Revendications

1. Procédé pour faire fonctionner un moteur à combustion interne, de l'air frais, du carburant et du gaz d'échappement recirculé étant acheminés et dosés à chaque fois à au moins une chambre de combustion du moteur à combustion interne au moyen d'une recirculation de gaz d'échappement à basse pression (ND_AGR) et, en fonction d'une demande de charge au niveau du moteur à combustion interne, d'un état de fonctionnement du moteur à combustion interne et d'un procédé de combustion momentanément actif, une quantité de carburant à acheminer à la chambre de combustion et une quantité du gaz d'échappement recirculé étant calculées, dans une première étape, en fonction d'une demande de charge au niveau du moteur à combustion interne, et d'un état de fonctionnement du moteur à combustion interne et d'un procédé de combustion momentanément actif, une proportion de carburant nécessaire pour la combustion et une proportion d'au moins un gaz inerte acheminé nécessaire pour la combustion dans l'air frais étant déterminées et **caractérisé en ce que** dans une deuxième étape, en fonction de la proportion d'oxygène nécessaire et de la proportion nécessaire d'au moins un gaz inerte dans l'air frais acheminé, la quantité de carburant, la quantité d'air frais et/ou la quantité de gaz d'échappement recirculé à acheminer à une chambre de combustion étant déterminées par des bilans indépendants l'un de l'autre de l'oxygène et du gaz inerte, le moteur à combustion interne étant associé à un turbocompresseur à gaz d'échappement et du gaz d'échappement recirculé supplémentaire étant acheminé et dosé au moyen d'une recirculation de gaz d'échappement à haute pression (HD-AGR) et/ou d'une recirculation de gaz d'échappement interne (innere AGR).

2. Procédé selon la revendication 1, **caractérisé en ce que** l'au moins un gaz inerte comprend de l'azote (N₂), du dioxyde de carbone (CO₂), de la vapeur d'eau (H₂O), de l'oxyde d'azote (NOₓ), du monoxyde de carbone (CO), des hydrocarbures (HC) et/ou des particules.

3. Procédé selon au moins l'une quelconque des revendications précédentes, **caractérisé en ce que** dans la deuxième étape, la quantité de carburant, la quantité d'air frais et/ou la quantité du gaz d'échappement recirculé devant être acheminées à une chambre de combustion sont déterminées de telle sorte que la charge totale de cette chambre de combustion contienne une quantité prédéterminée d'azote (N₂), de dioxyde de carbone (CO₂), d'oxygène (O₂), de gaz inerte et/ou de vapeur d'eau (H₂O), en particulier avec une densité de charge prédéfinie.

4. Procédé selon au moins l'une quelconque des revendications précédentes, **caractérisé en ce que** la proportion d'oxygène dans l'air frais acheminé est calculée à partir d'un premier signal de sonde lambda qui représente une valeur lambda d'un gaz d'échappement, d'un deuxième signal de sonde lambda qui représente une valeur lambda de l'air frais, et d'un signal de courant de masse qui représente un courant de masse de l'air frais.

5. Procédé selon au moins l'une quelconque des revendications précédentes, **caractérisé en ce que** dans la première étape en outre une proportion de l'oxygène et une proportion d'au moins un gaz inerte du gaz d'échappement recirculé sont déterminées et dans la deuxième étape la quantité de carburant, la quantité d'air frais et/ou la quantité de gaz d'échappement recirculé devant être acheminées à une chambre de combustion sont en outre déterminées en fonction de la proportion d'oxygène et de la proportion d'au moins un gaz inerte du gaz d'échappement recirculé.

6. Procédé selon au moins l'une quelconque des revendications précédentes, **caractérisé en ce que** la quantité d'air prédéterminée est dosée dans une chambre de combustion par une commande de soupape variable.

7. Procédé selon au moins l'une quelconque des revendications précédentes, **caractérisé en ce que** la quantité d'air frais déterminée est dosée dans les chambres de combustion du moteur à combustion interne de manière individuelle pour chaque cylindre.
